# EUROPEAN PATENT APPLICATION

(11) **EP 3 783 870 A1**
(43) Date of publication of application: **24.02.2021**
(21) Application number: 19858631.5
(22) Date of filing: 16.07.2019
(51) Int. Cl.: H04L 29/12

(54) **NETWORK REQUEST PROCESSING METHOD AND SYSTEM AND INGRESS AND EGRESS NETWORK DEVICES**

(30) Priority: 19.06.2019 CN 201910530338
(71) Applicant: Xiamen Wangsu Co., Ltd., Xiamen, Fujian 361003 (CN)
(72) Inventor: CHEN, Jiawei, Xiamen, Fujian 361003 (CN)
(74) Representative: Vinsome, Rex Martin
(86) International application number: PCT/CN2019/096168
(87) International publication number: WO 2020/252834

(57) **Abstract**

This disclosure relates to the technical field of communications, and discloses a method and system for processing network request, an entry network device, and an exit network device. The method for processing network request includes: recognizing a received network request and sending a recognized DNS resolution request to a first DNS network-namespace by a first local area network-namespace; and receiving the DNS resolution request, obtaining a resolution result and sending the resolution result to the first local area network-namespace as a response by the first DNS network-namespace; wherein the first local area network-namespace and the first DNS network-namespace are deployed on a first network device which further comprises at least one first local area network-namespace, and each of the first local area network-namespaces sends a corresponding DNS resolution request to the first DNS network-namespace for resolution.

## Description

### CROSS REFERENCE TO RELATED APPLICATIONS

This disclosure claims priority for Chinese Patent Application No. 201910530339.0 filed on June 19, 2019 and titled "Method and System for Processing Network Request, Entry Network Device and Exit Network Device", with all its contents incorporated into this disclosure by reference.

### TECHNICAL FIELD

This disclosure relates to communication technologies, in particular to a method and system for processing network request, an entry network device, and an exit network device.

### BACKGROUND

In most cases, network acceleration service providers have to provide customized services for more than one enterprise user at the same time, and many of these customized services have common requests, for instance, the resolution request for identical domain names. In the prior art, all enterprise users are independently managed, and identical requests from these users are processed separately to guarantee safe data isolation. However, in this case, the service providers have to deploy many devices to process these requests, and a large quantity of resources will be consumed to process these identical requests.

### SUMMARY

An objective of this disclosure is to provide a method and system for processing network request, an entry network device, and an exit network device, which are so designed that network-namespaces (etns), which are virtual network devices defined by one physical machine, are adopted to fulfill network isolation of different enterprise users, and DNS network-namespaces are deployed to process requests from different users in a unified manner, so that DNS resolution results can be shared, thus, saving network resources and improving DNS resolution efficiency.

To fulfill the above objective, this disclosure provides a method for processing network request including the following steps: recognizing a received network request and sending a recognized DNS resolution request to a first DNS network-namespace, by a first local area network-namespace; and receiving the DNS resolution request, obtaining a resolution result and sending the resolution result to the first local area network-namespace as a response, by the first DNS network-namespace; wherein, the first local area network-namespace and the first DNS network-namespace are deployed on a first network device which at least includes one first local area network-namespace; and at least one other local area network-namespace is also deployed on the first network device, and each of the local area network-namespaces sends a corresponding DNS resolution request to the first DNS network-namespace for resolution.

This disclosure further provides an entry network device which is deployed with a local area network-namespace and a DNS network-namespace, wherein the local area network-namespace receives a network request sent from a corresponding local area network by means of a virtual private network, then recognizes the network request, sends a recognized DNS resolution request to the DNS network-namespace, and forwards a recognized service request according to a local routing strategy; and the DNS network-namespace receives the DNS resolution request sent from the local area network-namespace to obtain a resolution result and sends the resolution result to the local area network-namespace as a response, wherein the resolution result is obtained by forwarding the DNS resolution request to a DNS recursive server or a DNS network-namespace on an exit network device.

This disclosure further provides an exit network device which is deployed with a local area network-namespace and a DNS network-namespace, wherein the DNS network-namespace receives a DNS resolution request to obtain a resolution result corresponding to the DNS resolution request and shares the resolution result with the local area network-namespace; and the local area network-namespace allocates a routing strategy for an IP address in the resolution result and sends the routing strategy to a corresponding local area network-namespace on an entry network device.

This disclosure further provides a system for processing network request which comprises the entry network device and the exit network device, wherein the entry network device is in communication with at least one local area network to receive and process network requests sent from the local area networks.

Different from the existing art, in this disclosure, the first local area network-namespace recognizes a received network request to obtain a DNS resolution request, and then the DNS resolution request is sent to the first DNS network-namespace to be processed in a unified manner by the first DNS network-namespace, and an obtained resolution result is sent to the first local area network-namespace as a response, so that unified management of the DNS resolution request is realized. The first local area network-namespace and the first DNS network-namespace are deployed on a first network device which further comprises at least one first local area network-namespace, and in the case where multiple different first local area network-namespaces send the same DNS resolution request, the first DNS network-namespace only needs to carry out resolution when receiving the DNS resolution request the first time to obtain a resolution result, and then the obtained resolution result can be directly shared by all the first local area network-namespaces sending the DNS resolution request, so that repeated resolution of identical DNS resolution requests is avoided, thus, improving the DNS resolution efficiency and more importantly, saving device resources.

Furthermore, each of the first local area network-namespaces receives network requests sent from a corresponding local area network via a corresponding virtual private channel. Each of the local area network-namespaces exchanges information with the local area network in charge via the virtual private channel, so that data isolation of different local area networks is guaranteed.

Furthermore, the resolution result is obtained in such a manner: a resolution result corresponding to the DNS resolution request is obtained from a local cache; or, if it is unable to obtain the corresponding resolution result from the local cache, the DNS resolution request is forwarded. The resolution result can be directly obtained when locally available, so that a quick response is realized.

Furthermore, a second DNS network-namespace sends a received DNS resolution request to a DNS recursive server to obtain a resolution result which is in turn shared by a second local area network-namespace deployed on a second network device; and the second local area network-namespace allocates a routing strategy for an IP address corresponding to the resolution result and sends the routing strategy to the corresponding first local area network-namespace on the first network device. A routing strategy is allocated for the IP address corresponding to the resolution result, and a corresponding IP service request sent from users can be directly forwarded according to the matching routing strategy, so that the routing time is shortened for the users, and the users can obtain service data faster, which means that service data of an application requested by the users is effectively accelerated.

Furthermore, the second DNS network-namespace determines an application corresponding to the DNS resolution request and shares the resolution result with the second local area network-namespace with an application acceleration demand on the second network device, and the second local area network-namespace allocates a routing strategy for an IP address corresponding to the resolution result and sends the routing strategy to the corresponding first local area network-namespace on the first network device. The resolution result is shared only by local area network-namespaces with the corresponding application acceleration demand, so that acceleration resources can serve the application with the acceleration demand in a more targeted manner.

Furthermore, the first local area network-namespace forwards a recognized service request according to a local routing strategy, wherein the local routing strategy includes a routing strategy received from the second local area network-namespace. The recognized service request is forwarded according to the routing strategy, so that real-time route matching is avoided, which may otherwise decrease the service response speed.

### BRIEF DESCRIPTION OF THE DRAWINGS

One or more embodiments are illustratively explained below in combination with corresponding drawings. These illustrative explanations are not intended to limit the embodiments. In the drawings, similar reference signs represent similar components, and unless otherwise particularly specified, the drawings are not drawn to scale.
FIG. 1 is a flow diagram of a method for processing network request in the first embodiment of this disclosure;
FIG. 2 is a flow diagram for obtaining a resolution result in the second embodiment of this disclosure;
FIG. 3 is a structural diagram of a first network device in the third embodiment of this disclosure;
FIG. 4 is a structural diagram of a second network device in the fourth embodiment of this disclosure;
FIG. 5 is a structural diagram of a system for processing network request in the fifth embodiment of this disclosure.

### DETAILED DESCRIPTION

For a better understanding of the objectives, technical solutions, and advantages of this disclosure, the embodiments of this disclosure are expounded below with reference to the accompanying drawings. However, those ordinarily skilled in the field will appreciate that although many technical details are given in the following embodiments to fulfill a better appreciation of readers, the technical solutions claiming protection by this disclosure can still be implemented without these technical details and various transformations and amendments of the embodiments mentioned below. Division of the following embodiments is used to facilitate description, and is not intended to limit the specific implementation of this disclosure in any way. Combination and mutual reference of these embodiments are available without causing contradictions.

Aimed at the problems put forward in the background, this disclosure provides a novel network architecture including an entry network device and an exit network device, wherein the entry network device directly receives network requests from users, a plurality of local area network-namespaces are deployed on the entry network device to receive network requests from users and are connected to different enterprise users (i.e., different local area networks), and a DNS network-namespace is also deployed on the entry network device to process DNS resolution requests acquired from the local area network-namespaces.

The exit network device is in communication with the entry network device and is able to send received network requests to a target device via the Internet. Local area network-namespaces in one-to-one correspondence with the plurality of local area network-namespaces on the entry network device are deployed on the exit network device to realize network isolation of user local area networks, and a DNS network-namespace corresponding to the DNS network-namespace on the entry network device is also deployed on the exit network device to process DNS resolution requests acquired from the DNS network-namespace on the entry network device.

As can be seen, in this solution, DNS resolution requests from the local area network-namespaces are processed in a unified manner to realize centralized management of DNS resolution requests from different user local area networks, and a foundation is laid for realizing DNS resolution result sharing.

In one embodiment, the unified DNS network-namespace is deployed to save a resolution result of a domain name required by a user, so that the resolution result can be directly returned to other users initiating the same DNS resolution request, and therefore, sharing of the DNS resolution result is realized.

For the sake of a clear illustration of the specific working method of the local area network-namespaces which receive network requests from users, one local area network-namespace is specifically explained as an example in the following embodiment. It should be noted that the local area network-namespaces in the network architecture in this disclosure have the same specific working method.

The first embodiment of this disclosure relates to a method for processing network request. The concept of this embodiment lies in that: a first local area network-namespace recognizes a received network request and sends a recognized DNS resolution request to a first DNS network-namespace; the first DNS network-namespace receives the DNS resolution request, obtains a resolution result for the request and sends the resolution result to the first local area network-namespace as a response. The first local area network-namespace and the first DNS network-namespace are deployed on a first network device which further comprises at least one other first local area network-namespace, so that unified processing of DNS resolution requests is realized, sharing of the DNS resolution result is fulfilled, and the DNS resolution efficiency is improved. The implementation of the method for processing network request in this embodiment is detailed and specified below. The following contents are only implementation details provided to facilitate understanding, and are not indispensable for implementing this solution.

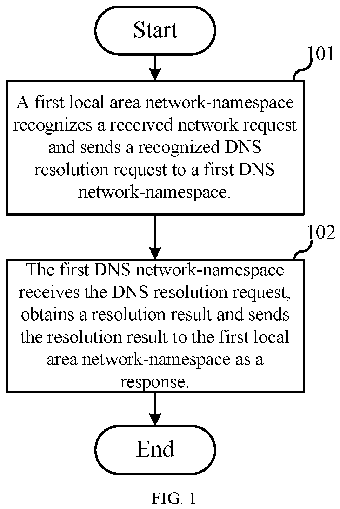

As shown in FIG. 1 which is a flow diagram of the method for processing network request in this embodiment, the method specifically includes the following steps:

Step 101, a first local area network-namespace recognizes a received network request and sends a recognized DNS resolution request to a first DNS network-namespace.

Particularly, an enterprise user may be regarded as a local area network, and a communication network may be established in the enterprise to realize network interaction between different workers and different departments as well as network interaction with external networks. In this embodiment of the disclosure, more than one local area network may be established for one enterprise user to realize trans-region or trans-department network management.

One local area network-namespace correspondingly may manage one user local area network, and a virtual private channel may be established between the local area network-namespace and the local area network in charge, and the first local area network-namespace may interact with the local area network via the virtual private channel to receive a network request sent from the local area network, and thus, network isolation between different local area networks is guaranteed.

In this embodiment, the network request may include a DNS resolution request or a service request. If the first local area network-namespace recognizes that the network request is a DNS resolution request, the recognized DNS resolution request is sent to the first DNS network-namespace. The DNS resolution may be sent through connection established between the first local area network-namespace and the first DNS network-namespace.

It should be noted that in this embodiment, the first local area network-namespace and the first DNS network-namespace may be both deployed on a first network device. The first network device may be further deployed with at least one other first local area network-namespace, and each of the first local area network-namespaces may send a corresponding DNS resolution request to the first DNS network-namespace for resolution.

In one specific example, different enterprise users may correspond to different local area networks, and each of the first local area network-namespaces may receive a network request sent from the corresponding local area network. That is to say, the first local area networks are able to receive and process network requests from different enterprise users. For instance, the first local area network-namespace corresponding to an enterprise user 1 may receive a network request from the enterprise user 1, and the first local area network-namespace corresponding to an enterprise user 2 may receive a network request from the enterprise user 2 and cannot receive the network request from the enterprise user 1, so that data requests from different enterprise users are isolated on the communication link. The first local area network-namespaces may send the DNS resolution requests received to the first DNS network-namespace for processing. In this way, the first DNS network-namespace receives the DNS resolution requests from all the enterprise users to realize centralized management of the DNS resolution requests, and a foundation is laid for sharing of DNS resolution results.

Step 102, the first DNS network-namespace receives the DNS resolution request, obtains a resolution result and sends the resolution result to the first local area network-namespace as a response.

Particularly, when receiving the DNS resolution request sent from the first local area network-namespace, the first DNS network-namespace may forward the DNS resolution request to a DNS recursive server, and receive and save a resolution result returned by the DNS recursive server. Before the DNS resolution request is forwarded to the DNS recursive server, whether there exists a resolution result corresponding to the DNS resolution request in a local cache may be determined. If yes, a local resolution result may be directly obtained; or if not, the DNS resolution request may be forwarded to the DNS recursive server, and then the first DNS network-namespace may send the resolution result to the corresponding first local area network-namespace as a response. When the resolution result is locally available, the resolution result may be locally acquired directly, so that a quick response is realized.

In this embodiment, the first network device may be deployed with more than one local area network-namespaces, and all the local area network-namespaces may send corresponding DNS resolution requests to the first DNS network-namespace for resolution. As an example, two local area network-namespaces are explained below.

netns1 and netns2 represent two different local area network-namespaces which respectively receive network requests from user 1 and user 2, and the two different local area network-namespaces may send DNS resolution requests received to the first DNS network-namespace for resolution.

When receiving a DNS resolution request for a first application from user 1, netns1 may send the DNS resolution request to the first DNS network-namespace for resolution. The first DNS network-namespace may determine whether or not a resolution result corresponding to the DNS resolution request is locally available. If yes, the resolution result may be locally acquired directly; or if not, the DNS resolution request may be sent to the DNS recursive server for resolution to obtain a resolution result; and after the resolution result is obtained, the first DNS network-namespace may send the resolution result to netns1 as a response.

When netns2 also receives the same DNS resolution request for the first application from user 2, the first DNS network-namespace may directly return the previously-obtained resolution result to netns2.

In this way, the resolution result returned by the first DNS network-namespace as a response to DNS resolution requests with the same domain name is controllable. Particularly, the resolution result obtained from the DNS recursive server by the first DNS network-namespace may include a plurality of IP addresses, the first DNS network-namespace may directly select one or more from the IP addresses and then send the selected IP address to the requester as a response, and thus, the result corresponding to DNS resolution requests can be optimized by setting the IP address selection manner of the first DNS network-namespace. For instance, the first DNS network-namespace may select one IP address from the multiple IP addresses and feed back the selected IP address to the corresponding first local area network-namespace as a response, wherein the IP address selected will not conflict with an IP in the corresponding local area network, so that the validity of the resolution result is guaranteed.

Different from the existing art, in this embodiment, the received network request may recognized as a DNS resolution request by the first local area network-namespace; and then the recognized DNS resolution request may be sent to the first DNS network-namespace to be processed in a unified manner, and a resolution result may be obtained and sent to the first local area network-namespace as a response, so that unified management of all DNS resolution requests is realized. The first local area network-namespace and the first DNS network-namespace are both deployed on a first network device which further comprises at least one other first local area network-namespace; when multiple different first local area network-namespaces send the same DNS resolution request, the first DNS network-namespace may just need to carry out resolution when receiving the DNS resolution request the first time and then it directly share the resolution result with all the first local area network-namespaces sending the DNS resolution request, so that repeated resolution of identical DNS resolution requests is avoided, and the DNS resolution efficiency is improved.

In this embodiment of the disclosure, the process of sending the DNS resolution request to the DNS recursive server by the first DNS network-namespace may be implemented in the following two ways: the first DNS network-namespace may directly send the DNS resolution request to a DNS recursive server of a public network so as to acquire a resolution result from the DNS recursive server; or the first DNS network-namespace may directly forward the DNS resolution request to a second DNS network-namespace on a second network device so as to receive a resolution result from the second DNS network-namespace.

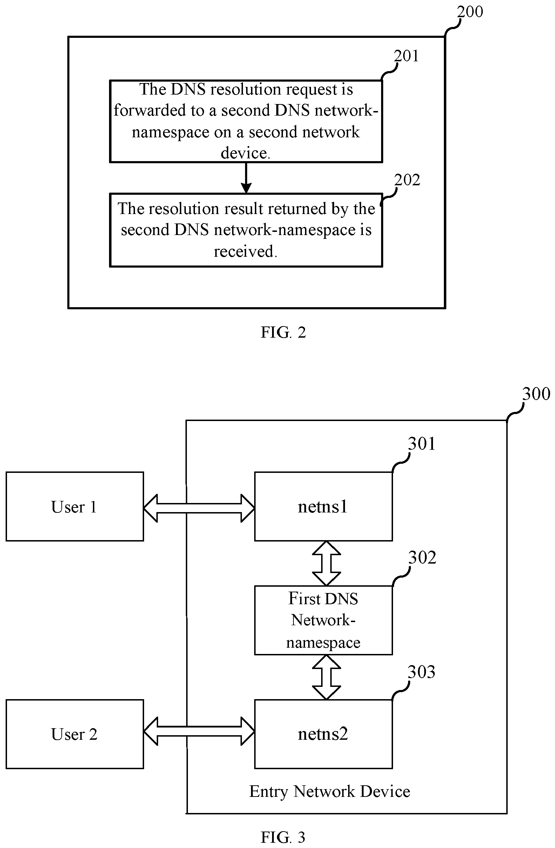

The later process is detailed below with reference to FIG. 2 which shows a processing flow to be performed after the first DNS network-namespace in the first embodiment of this disclosure forwards the DNS resolution request to the second DNS network-namespace.

Step 201, the DNS resolution request is forwarded to a second DNS network-namespace on a second network device.

Particularly, in this embodiment, network-namespaces corresponding to the network-namespaces on the first network device in the first embodiment may be deployed on a second network device, namely, the second network device may be deployed with second local area network-namespaces corresponding to the first local area network-namespaces and a second DNS network-namespace corresponding to the first DNS network-namespace. The first local area network-namespaces may be in communication with the corresponding second local area network-namespaces, and the first DNS network-namespace may be in communication with the second DNS network-namespace.

As described above, when receiving the DNS resolution request, the first DNS network-namespace may forward the DNS resolution request to the second DNS network-namespace for resolution. When receiving the DNS resolution request from the first DNS network-namespace, the second DNS network-namespace may forward the DNS resolution request to the DNS recursive server of the public network to obtain a resolution result.

Notably, in one embodiment of this disclosure, after obtaining the resolution result, the second DNS network-namespace may further share the resolution result with the second local area network-namespace on the second network device. The second local area network-namespace may allocate a routing strategy for an IP address corresponding to the resolution result and send the routing strategy to the corresponding first local area network-namespace on the first network device.

The first local area network-namespace may receive and save the routing strategy, determine a forwarding path according to the locally-saved routing strategy when receiving a service request, and forward the service request along the determined forwarding path. Particularly, the first local area network-namespace may recognize a network request received from the corresponding user local area network; if the network request is recognized as a service request, the recognized service request may be forwarded according to the local routing strategy, wherein the local routing strategy may be a routing strategy received from the second local area network-namespace and particularly may refer to forwarding the request to the corresponding second local area network-namespace on the second network device and carrying out acceleration by the second local area network-namespace or directly sending the request to a source server. The second local area network-namespace may carry out acceleration on the service request by forwarding the service request to a high-quality circuit or by forwarding the service request to an acceleration server, according to the routing strategy.

Furthermore, when receiving the DNS resolution request, the second DNS network-namespace may determine an application sending the request according to domain name information in the request. After a resolution result is obtained, the resolution result may be sent to and shared by the second local area network-namespace with a service acceleration demand corresponding to the application.

In this embodiment, more than one second local area network-namespace may be deployed on the second network device. For instance, two local area network-namespaces which are respectively presented as netns3 and netns4 may be deployed on the second network device and respectively correspond to netns1 and netns2 mentioned in the first embodiment.

When receiving a DNS resolution request sent from a user local area network, netns1 in the first network device may send the DNS resolution request to the first DNS network-namespace which may in turn send the DNS resolution request to the second DNS network-namespace in the second network device. After obtaining a resolution result, the second DNS network-namespace may feed the resolution result back to the first DNS network-namespace in the first network device, and the first DNS network-namespace may share the resolution result with the second local area network-namespace netns3.

The second DNS network-namespace may determine an application sending the DNS resolution request according to domain name information contained in the DNS resolution request, then determine whether the users corresponding to the second local area network-namespaces netns3 and netns4 subscribe to a network acceleration service for the application, and finally, send a resolution result to the second local area network-namespaces netns3 and/or netns4 subscribing to the network acceleration service.

In this embodiment, assume the user corresponding to netns4 requires the acceleration service for the application, and the second DNS network-namespace sends the resolution result to netns4. After receiving the resolution result, netns4 may allocate a routing strategy for an IP address in the resolution result and send the routing strategy to netns2, so that when receiving the service request for the application, netns2 can directly forward the service request according to the routing strategy. The resolution result may be shared only by the local area network-namespaces subscribing to the network acceleration service for the application, so that acceleration resources can serve the corresponding application in a more targeted manner.

From the above description, in this embodiment of the disclosure, the matching routing strategy is allocated for the IP address corresponding to the resolution result, so that when users send corresponding IP service requests, the service requests can be directly forwarded according to the matching routing strategy, the routing time is saved for users, and the users can obtain service data faster, which means that the service data of the application requested by the users is effectively accelerated.

Step 202, the resolution result returned by the second DNS network-namespace is received.

The step division of the above method is only used to provide a clear description. In actual implementation, the steps can be combined into one, or one step can be divided into multiple steps without changing the logic relation, and all these transformations should fall within the protection scope of this patent. Inessential modifications or designs added to the method or process without changing the essential concept of the method or process should also fall within the protection scope of this patent.

On the basis of the same concept, the second embodiment of this disclosure provides an entry network device. As shown in FIG. 3, the entry network device 300 may be deployed with one or more local area network-namespaces and a DNS network-namespace. For instance, in FIG. 3, two local area network-namespaces (namely a local area network-namespace netns1 301 and a local area network-namespace netns2 303) and a first DNS network-namespace 302 may be deployed on the entry network device 300. The local area network-namespace netns1 301 and the local area network-namespace netns2 303 may receive network requests sent from corresponding user local area networks via a virtual private network, recognize the network requests, send recognized DNS resolution requests to the first DNS network-namespace 302, and forward recognized service requests according to a local routing strategy. The first DNS network-namespace 302 may receive the DNS resolution requests sent from the local area network-namespaces to obtain a resolution result and send the resolution result to the corresponding local area network-namespaces as a response. The resolution result may be obtained by forwarding the DNS resolution requests to a DNS recursive server or a DNS network-namespace on an exit network device.

Clearly, the entry network device in this embodiment may be equivalent to the first network device in the above embodiment, and this embodiment may be implemented in cooperation with the first embodiment. Related technical details mentioned in the first embodiment still remain valid in this embodiment, and in order to avoid repetition, these details will not be given anymore herein. Correspondingly, related technical details in this embodiment can also be applied to the above embodiment.

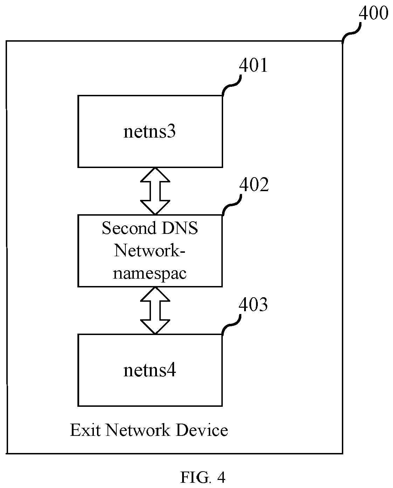

The third embodiment of this disclosure relates to an exit network device. As shown in FIG. 4, the exit network device 400 may be deployed with one or more local area network-namespaces and a DNS network-namespace. For instance, in FIG. 4, two local area network-namespaces (namely a local area network-namespace netns3 401 and a local area network-namespace netns4 403) and a second DNS network-namespace 402 may be deployed on the exit network device 400. The second DNS network-namespace may receive a DNS resolution request to obtain a resolution result corresponding to the DNS resolution request and send the resolution result to the local area network-namespaces netns3 and netns4. The local area network-namespaces netns3 and netns4 may allocate routing strategies for IP addresses in the resolution result and send the routing strategies to the corresponding local area network-namespaces on the entry network device.

The exit network device in this embodiment may be equivalent to the second network device in the above embodiment. Related technical details mentioned in the above embodiment still remain valid in this embodiment to realize identical technical effects, and in order to avoid repetition, these details will not be given anymore herein. Correspondingly, related technical details in this embodiment can also be applied to the above embodiment.

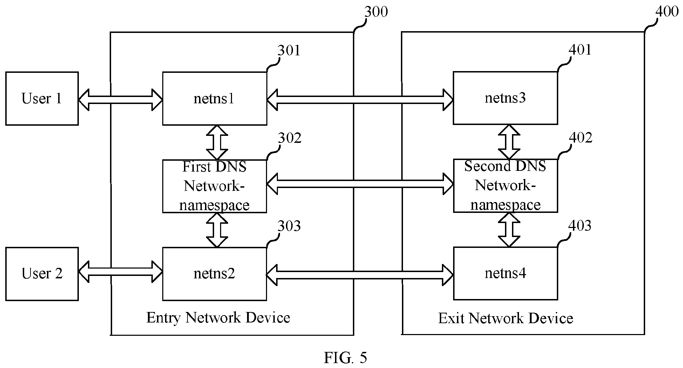

The fourth embodiment of this disclosure relates to a system for processing network request. As shown in FIG. 5, the system for processing network request may comprise the entry network device 300 in the second embodiment and the exit network device 400 in the third embodiment, wherein the entry network device may be in communication with at least one local area network to receive network requests sent from the local area networks.

In one specific example, the local area network-namespace netns1 301 and the local area network-namespace netns2 303 deployed on the entry network device 300 may be two different local area network-namespaces which respectively receive a network request from user 1 and a network request from user 2. The user 1 and the user 2 may be local area networks; and the two different local area network-namespaces may send the corresponding DNS resolution requests to the first DNS network-namespace 302 for resolution.

When receiving the DNS resolution request sent from a first application from user 1, netns1 may send the DNS resolution request to the first DNS network-namespace 302 for resolution. The first DNS network-namespace 302 may determine whether or not a resolution result corresponding to the DNS resolution request is locally available; if yes, the resolution result may be locally obtained directly; or if not, the DNS resolution request may be sent to the second DNS network-namespace 402 on the exit network device for resolution.

The local area network-namespace netns3 401 and the local area network-namespace netns4 403 may be two different local area network-namespaces and respectively correspond to the local area network-namespace netns1 301 and the local area network-namespace netns2 303 mentioned in the first embodiment. When receiving a DNS resolution request sent from the corresponding user, netns1 may forward the DNS resolution request to the first DNS network-namespace 302 which may in turn send the DNS resolution request to the second DNS network-namespace 402 on the exit network device 400 for resolution.

When receiving the DNS resolution request, the second DNS network-namespace 402 may determine an application sending the request according to domain name information in the request and forward the request to obtain a resolution result. After obtaining the resolution result, the second DNS network-namespace 402 may feed the resolution result back to the first DNS network-namespace 302 on the entry network device 300 and determine whether users corresponding to netns3 and netns4 subscribe to an acceleration service for the application. If yes, the resolution result may be shared by the local area network-namespaces netns3 and/or netns4 subscribing to the acceleration service, then the local area network-namespaces netns3 and/or netns4 may allocate corresponding routing strategies for IP addresses in the resolution result and share the routing strategies with the corresponding local area network-namespaces netns1 and/or netns2; or if not, the resolution result may be not shared.

When receiving the resolution result, the first DNS network-namespace 302 may send the resolution result to the local area network-namespace netns1 301; when the local area network-namespace netns2 303 also receives the same DNS resolution request for a first application, the first DNS network-namespace 302 may directly send the previously-obtained resolution result to the local area network-namespace netns2 303.

Notably, in the above embodiments, the communication between the corresponding network-namespaces on the entry network device and the exit network device may be realized via private channels which are established in advance. For instance, netns1 may be in communication with netns3 via a private channel, and as mentioned above, the corresponding local area network-namespaces on the user local area networks and the entry network devices may be in communication via private channels. In this way, network data from different user local area networks may be transmitted through independent transmission paths, and isolation of the network data may be realized. On this basis, the DNS resolution requests from the local area network-namespaces may be processed in a unified manner through the DNS network-namespaces, so that the DNS resolution result can be used repeatedly, network resources are saved, and the efficiency is improved. Further, a routing strategy may be automatically allocated and issued when the DNS resolution request is processed, so that a response can be given to the service requests more efficiently, and the service requests can be classified and managed in time.

Those ordinarily skilled in the field will appreciate that the above embodiments are only specific ones for implementing this disclosure. In actual applications, variations and modifications of these specific embodiments can be made in form and in detail without deviating from the sprit and scope of this disclosure.

## Claims

1. A method for processing network request, comprising:
recognizing a received network request and sending a recognized DNS resolution request to a first DNS network-namespace, by a first local area network-namespace; and
receiving the DNS resolution request, obtaining a resolution result and sending the resolution result to the first local area network-namespace as a response, by the first DNS network-namespace;
wherein, the first local area network-namespace and the first DNS network-namespace are deployed on a first network device; and
the first network device is further deployed with at least one other first local area network-namespace, and each of the first local area network-namespaces sends a respective DNS resolution request to the first DNS network-namespace for resolution.

2. The method for processing network request according to Claim 1, wherein each of the first local area network-namespaces receives a network request sent from a corresponding local area network via a virtual private channel.

3. The method for processing network request according to Claim 1, wherein the resolution result is obtained in such a manner: the DNS resolution request is forwarded to a DNS recursive server and then the resolution result returned by the DNS recursive server is received.

4. The method for processing network request according to Claim 1, wherein the resolution result is obtained in such a manner:
the DNS resolution request is forwarded to a second DNS network-namespace on a second network device; and
the resolution result returned by the second DNS network-namespace is received.

5. The method for processing network request according to Claim 3 or 4, wherein the resolution result is obtained in such a manner:
the resolution result corresponding to the DNS resolution request is obtained from a local cache; or
if the resolution result corresponding to the DNS resolution request is unavailable from the local cache, the DNS resolution request is forwarded.

6. The method for processing network request according to Claim 4, wherein the method further comprises:
sending, by the second DNS network-namespace, the resolution result to the second local area network-namespace on the second network device; and
allocating a routing strategy for an IP address corresponding to the resolution result and sending the routing strategy to the corresponding first local area network-namespace on the first network device, by the second local area network-namespace.

7. The method for processing network request according to Claim 4, wherein the method further comprises:
determining an application corresponding to the DNS resolution request and sharing the resolution result with the second local area network-namespace with an acceleration service demand for a same application on the second network device, by the second DNS network-namespace; and
allocating a routing strategy for an IP address corresponding to the resolution result and sending the routing strategy to the corresponding first local area network-namespace on the first network device, by the second local area network-namespace.

8. The method for processing network request according to Claim 6 or 7, wherein the method further comprises:
forwarding, by the first local area network-namespace, a recognized service request, according to a local routing strategy, wherein the local routing strategy comprises the routing strategy received from the second local area network-namespace.

9. An entry network device, being deployed with a local area network-namespace and a DNS network-namespace, wherein:
the local area network-namespace is configured to: receive a network request sent from a corresponding local area network via a virtual private network, recognize the network request, send a recognized DNS resolution request to the DNS network-namespace, and forward a recognized service request according to a local routing strategy; and
the DNS network-namespace is configured to: receive the DNS resolution request sent from the local area network-namespace to obtain a resolution result and send the resolution result to the local area network-namespace as a response, wherein the resolution result is obtained by forwarding the DNS resolution request to a DNS recursive server or a DNS network-namespace on an exit network device.

10. An exit network device, being deployed with a local area network-namespace and a DNS network-namespace, wherein:
the DNS network-namespace is configured to: receive a DNS resolution request, obtain a resolution result corresponding to the DNS resolution request and share the resolution result with the local area network-namespace; and
the local area network-namespace is configured to: allocate a routing strategy for an IP address in the resolution result and send the routing strategy to a corresponding local area network-namespace on an entry network device.

11. A system for processing network request, comprising the entry network device according to Claim 9 and the exit network device according to Claim 10, wherein the entry network device is in communication with at least one local area network to receive and process network requests sent from the local area networks.
